# EUROPÄISCHE PATENTSCHRIFT

(11) **EP 2 845 208 B1**
(45) Veröffentlichungstag und Bekanntmachung des Hinweises auf die Patenterteilung: **22.01.2020**
(21) Anmeldenummer: 13716985.0
(22) Anmeldetag: 02.04.2013
(51) Int. Cl.: H01F 27/28, H02K 15/04, H01F 41/061

(54) **KUPFER-FLACHWICKLUNG ZUR ERZEUGUNG MAGNETISCHER FELDER IN ELEKTRISCHEN ENERGIEWANDLERN MIT HOHEN FÜLLFAKTOREN**
FLAT COPPER WINDING FOR GENERATING MAGNETIC FIELDS IN ELECTRICAL ENERGY CONVERTERS WITH HIGH BULK FACTORS
ENROULEMENT PLAT EN CUIVRE UTILISÉ POUR PRODUIRE DES CHAMPS MAGNÉTIQUES DANS DES CONVERTISSEURS D'ÉNERGIE ÉLECTRIQUE À FACTEUR DE REMPLISSAGE ÉLEVÉ

(30) Priorität: 02.05.2012 DE 102012207228
(43) Veröffentlichungstag der Anmeldung: 11.03.2015
(73) Patentinhaber: Robert Bosch GmbH, 70442 Stuttgart (DE)
(72) Erfinder: WILDE, Alexandra, 71272 Renningen (DE); HUBER, Arne, 71034 Böblingen (DE); BARTH, Peter, 70195 Stuttgart (DE)
(86) Internationale Anmeldenummer: PCT/EP2013/056888
(87) Internationale Veröffentlichungsnummer: WO 2013/164146

(56) Entgegenhaltungen:
- EP-A1- 0 662 699
- DE-A1- 1 764 087
- DE-A1- 10 058 874
- GB-A- 584 851
- US-A1- 2005 122 200
- US-A1- 2010 026 133

## Beschreibung

Die vorliegende Erfindung betrifft ein Verfahren zur Herstellung einer Kupfer-Flachwicklung.

### Stand der Technik

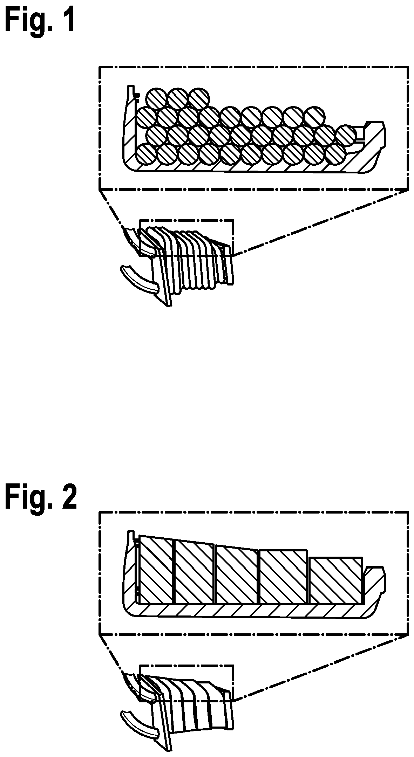

Spulenwicklungen zur Erzeugung von Magnetfeldern in Energiewandlern, insbesondere elektromagnetische Aktoren und rotierende elektrische Maschinen, werden heute zumeist mit Kupfer-Lackdraht ausgeführt. Dieser Lackdraht besitzt in der Regel einen runden Querschnitt. Hieraus ergibt sich bei der Bewicklung eines Spulenträgers, beispielsweise ein Magnettopf, Stator- oder Rotorzahn mit einem weichmagnetischen Kernmaterial, ein sogenannter Kupferfüllfaktor, der je nach Wicklung z.B. im Bereich von 40-55% liegt (siehe Fig. 1). Das weichmagnetische Kernmaterial gehört zu den ferromagnetischen Materialien, die sich in einem Magnetfeld leicht magnetisieren lassen. Diese magnetische Polarisation kann beispielsweise durch einen elektrischen Strom in einer stromdurchflossenen Spule oder durch Anwesenheit eines Permanentmagneten erzeugt werden. Die Polarisation führt in allen weichmagnetischen Werkstoffen zu einer vielfach höheren magnetischen Flussdichte als das von außen wirkende magnetische Feld in Luft erzeugt. Dadurch kann ein weichmagnetisches Kernmaterial ein äußeres Magnetfeld um die Werkstoffpermeabilität verstärken. Der Begriff Kupferfüllfaktor bezeichnet hierbei, die in den zur Verfügung stehenden Wickelraum eingebrachte Menge an elektrischen Leitern einschließlich deren Isolationsschicht. Ein runder Draht schließt somit immer Räume ein, die nicht elektrisch wirksam sind. Durch spezielle Profildrähte, beispielsweise Drähte mit quadratischem Querschnitt, kann der Kupferfüllfaktor weiter gesteigert werden. Jüngst werden im wissenschaftlichen Umfeld gegossene Spulen diskutiert, welche bei rechteckigem Querschnitt zu einem deutlich höheren Kupferfüllfaktor (bis ca. 70%) führen (siehe Fig. 2).

Der Prozess des Gießens von derartigen Spulen sowie der Beschichtung ist vergleichsweise zeit-, material-, und somit kostenintensiv.

DE 17 64 087 A1 offenbart ein Verfahren zum Herstellen von Faltwicklungen für elektrische Induktionsgeräte.

EP 0 662 699 A1 betrifft ein Ladesystem, das einen Induktivladekoppler umfasst, der an eine Energiequelle anschließbar ist, und das eine Induktivladedose umfasst, in die der Induktivladekoppler einführbar ist.

DE 100 58 874 A1 offenbart einen Mäanderförmigen Leiter, geformt aus einem metallischen Band zu einer selbsttragenden Spule.

US 2005/122200 A1 offenbart einen Induktor mit hohem Strom und niedrigem Profil umfassend eine Induktionsspule, die von einem magnetischen Material umgeben ist, um einen Induktorkörper zu bilden.

### Offenbarung der Erfindung

Gegenstand der vorliegenden Erfindung ist ein Verfahren zur Herstellung einer Kupferflachwicklung gemäss Anspruch 1.

Hierdurch kann durch einfache Fertigungsprozesse gegenüber dem Stand der Technik ein hoher Kupferfüllfaktor erreicht werden. Dabei kann die erforderliche Prozesstechnologie auf besonders einfachen und preisgünstigen Verfahren beruhen. Das Kupferband kann dabei einen rechteckigen Querschnitt aufweisen. Dies hat gegenüber einer gegossenen Flachwicklung den Vorteil, dass der Fertigungsprozess einfacher und kostengünstiger ist.

Erfindungsgemäss wird das sich wiederholende Muster durch ein Stanzverfahren, Laserschneiden, Erodieren oder durch Wasserstrahlschneiden erzeugt. Dies ermöglicht es, dass das sich wiederholende Muster auf einfache und kostengünstige Weise hergestellt wird. Dabei kann das sich wiederholende Muster eine quaderförmige, zylindrische, mehreckige, ovale, runde oder ähnliche Form aufweisen, wobei die Form des sich wiederholenden Musters sich nach der Form des Spulenträgers richtet, auf welche die Kupferflachwicklung später draufgesteckt wird, um einen Energiewandler herzustellen.

Die Dicke des Kupferbandes kann einem ersten Maß eines Leiterquerschnitts entsprechen und die Breite des Kupferbandes kann sich aus einem zweiten Maß des Leiterquerschnitts und sich aus den Abmessungen eines Spulenträgers ergeben. Dabei kann der Leiterquerschnitt dem Wunsch des Benutzers entsprechend ausgewählt werden, um einen gewünschten Energiewandler herzustellen. Das zweite Maß des Leiterquerschnitts kann dabei über das sich wiederholende Muster gebildet werden. Durch das Erzeugen des sich wiederholenden Musters kann von der Breite des Kupferbandes die Abmaße des Spulenträgers herausgetrennt werden, so dass der übrig bleibende Teil des Kupferbandes dem zweiten Maß des Leiterquerschnitts entsprechen kann. Das Kupferband kann in der Breite mehreren Teilstreifen entsprechen. Dadurch kann in einem Prozessschritt aus einem Kupferband mehrere Kupfer-Flachwicklungen hergestellt werden.

Erfindungsgemäss wird der spiralförmige Körper nach der Kaltverformung glühbehandelt. Durch die Glühbehandlung kann eine ausreichende elektrische Leitfähigkeit wieder hergestellt werden.

Erfindungsgemäss wird der spiralförmige Körper nach der Glühbehandlung mit einem elektrisch isolierenden Stoff beschichtet. Dadurch können vorteilhafterweise auch die Stanz- oder Schnittkanten bei dem Herstellungsprozess mit isoliert werden.

Vorteilhafterweise kann die elektrisch isolierende Beschichtung der Kupfer-Flachwicklung durch ein Tauchbad oder durch eine Sprühbehandlung erfolgen. Dadurch kann auf eine besonders einfache und kostengünstige Weise eine elektrisch isolierende Beschichtung der Kupfer-Flachwicklung verwirklicht werden.

Hinsichtlich weiterer bevorzugter Merkmale und Vorteile des erfindungsgemäßen Gegenstands wird hiermit explizit auf die Erläuterungen im Zusammenhang mit dem erfindungsgemäßen Verfahren zur Herstellung einer Kupfer-Flachwicklung sowie auf die Beispiele verwiesen.

### Zeichnung und Beispiele

Weitere Vorteile und vorteilhafte Ausgestaltungen der erfindungsgemäßen Gegenstände werden durch die Zeichnung und die Beispiele veranschaulicht und in der nachfolgenden Beschreibung erläutert. Dabei ist zu beachten, dass die Zeichnung und die Beispiele nur beschreibenden Charakter haben und nicht dazu gedacht sind, die Erfindung in irgendeiner Form einzuschränken. Es zeigt
- Fig. 1: eine Ansicht eines Kupferfüllfaktor aus einem Ausschnitt eines Querschnitts eines Energiewandlers mit rundem Kupfer-Lackdraht,
- Fig. 2: eine Ansicht eines Kupferfüllfaktor aus einem Ausschnitt eines Querschnitts eines Energiewandlers mit einer gegossenen Spule mit einem rechteckigen Querschnitt,
- Fig. 3: eine Ansicht eines Kupferbandes, welches zur Herstellung der Kupfer-Flachwicklung verwendet wird,
- Fig. 4: eine Draufsicht auf einen Teilstreifen eines Kupferbandes mit einem sich wiederholenden Musters,
- Fig. 5: eine schematische Ansicht eines Umformungsprozesses, bei dem eine Kupfer-Flachwicklung aus einem Kupferband hergestellt wird,
- Fig. 6: eine schematische Ansicht eines Beschichtungsverfahrens der Kupfer-Flachwicklung vor dem letzten Kaltumformungsprozess,
- Fig. 7: eine isometrische Ansicht einer Kupfer-Flachwicklung.
- 1.: Herstellung einer Kupferflachwicklung

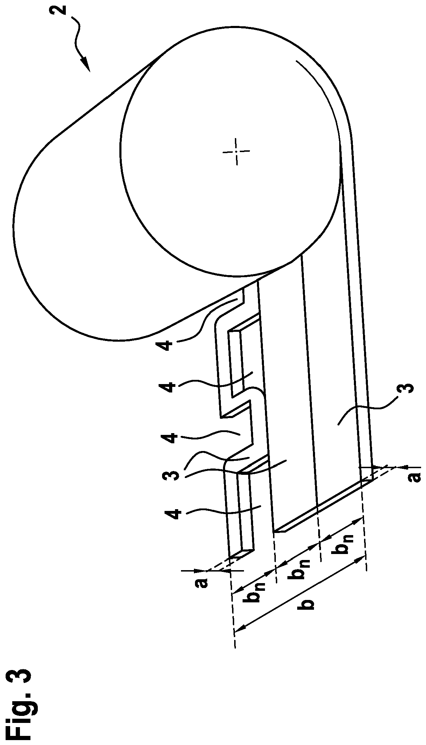

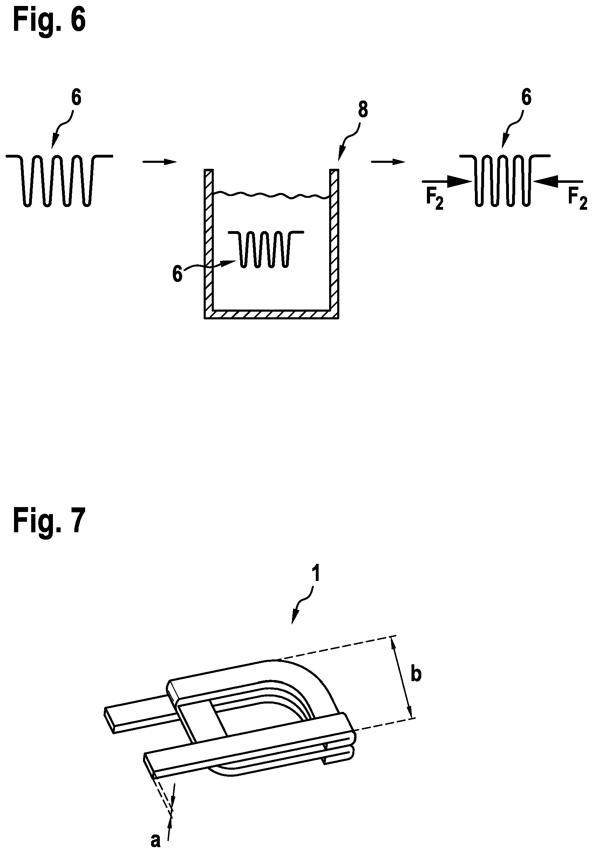

Fig. 3 zeigt ein Kupferband 2. Das Kupferband 2 wird bereitgestellt, um eine Kupfer-Flachwicklung 1 (siehe Fig. 7) herzustellen. Wie in Fig. 3 erkennbar ist das Kupferband 2 zu einer Rolle aufgerollt und hat einen rechteckigen Querschnitt. , In diesem Beispiel, das nicht Teil der Erfindung ist, ist das Kupferband 2 mit einem elektrisch isolierenden Stoff beschichtet ist (in Fig. 1 ist nicht dargestellt). Dadurch ist es nicht notwendig die fertig prozessierte Kupfer-Flachwicklung mit einem elektrisch isolierenden Stoff zu beschichten.

Das Kupferband 2 weist eine Dicke a auf, welche einem ersten Maß eines Leiterquerschnitts entspricht. Der Leiterquerschnitt wird dabei derart vom Benutzer ausgewählt um mit Hilfe der hergestellten Kupfer-Flachwicklung 1 und einem Spulenträger (nicht dargestellt) einen gewünschten Energiewandler herzustellen.

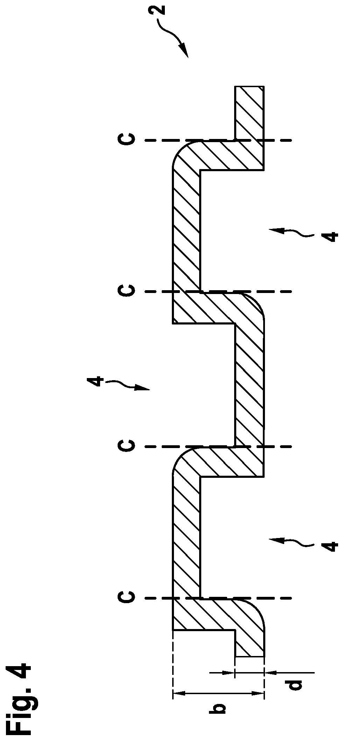

Weiterhin ist in Fig. 3 erkennbar, dass die Breite b des Kupferbandes 2 sich aus einem zweitem Maß d (siehe Figur 4) des Leiterquerschnitts, sowie der Abmessungen eines Spulenträgers (nicht dargestellt) ergibt. Das zweite Maß d des Leiterquerschnitts wird dabei über das sich wiederholende Muster 4 gebildet. Durch das Erzeugen des sich wiederholenden Musters 4 wird von der Breite b des Kupferbandes 2 die Abmaße des Spulenträgers herausgetrennt, so dass der übrig bleibende Teil des Kupferbandes2 dem zweiten Maß d des Leiterquerschnitts entspricht.

In dem in Fig. 3 dargestellten Beispiel ist erkennbar, dass die Breite b des Kupferbandes 2 mehreren Teilbreiten bn besteht. In diesem Beispiel entspricht die Breite b genau 3 Teilbreiten bn. Dies bedeutet, dass das Kupferband 2 während des ersten Fertigungsprozesses in diesem Beispiel in drei Teilstreifen 3 aufgeteilt wird. Es ist jedoch auch möglich, dass die Breite b des Kupferbandes b genau der Breite b der Kupferflachwicklung 1 entspricht und somit keine Teilbreiten bn aufweist, oder dass nur zwei Teilbreiten bn oder mehr als drei Teilbreiten bn vorhanden sind.

Die Abmessung des Spulenträgers wird benötigt, um ein sich wiederholendes Muster 4 in das Kupferband 2 und falls nötig in jedem Teilstreifen 3 zu erzeugen. In diesem Beispiel ist das sich wiederholende Muster 4 eine quaderförmige Aussparung, jedoch ist es auch möglich, dass das sich wiederholende Muster 4 eine andere Form, wie beispielsweise ein Mehreck, ein Kreis, ein Oval, eine Raute oder eine andere Form aufweist. Das sich wiederholende Muster 4 entspricht der Form eines Spulenträgers, auf dem die fertig prozessierte Kupfer-Flachwicklung 1 gesteckt wird um einen Energiewandler herzustellen. Während des Erzeugens des sich wiederholenden Musters wird auch das Kupferband 2 falls notwendig in die entsprechende Anzahl von Teilstreifen 3 aufgeteilt.

In Fig. 3 ist erkennbar, dass aus dem Kupferband 2 drei Teilstreifen 3 hergestellt werden, wobei nur auf einem Teilstreifen 3 bereits ein sich wiederholendes Muster 4 erzeugt worden ist. Auch in den anderen Teilstreifen 3 wird ein sich wiederholendes Muster 4 erzeugt, dies ist in Fig. 3 nicht dargestellt.

Das sich wiederholende Muster 4 wird durch einen kontinuierlichen Stanzprozess, Laserschneiden, Erodieren, oder Wasserstrahlschneiden erzeugt. Auf diese Weise können einfache, kostengünstige Fertigungsprozesse zum Erzeugen des sich widerholenden Musters 4 verwendet werden.

In Fig. 4 ist eine Draufsicht auf ein Kupferband 2 mit einem sich widerholenden Muster 4 dargestellt. Das Kupferband hat die Breite b und weist ein sich wiederholende Muster 4 mit einer quaderförmigen Aufsparung auf, wobei die quaderförmige Aussparung eine zyklisch sich wiederholende Geometrie darstellt. Durch Kaltverformen des Kupferbandes 2, beispielsweise durch Falten an den mit den gestrichelten Linien hervorgehobenen vorgesehenen Umformkanten C, wird ein spiralförmiger Körper 6 durch wechselweises Biegen geformt.

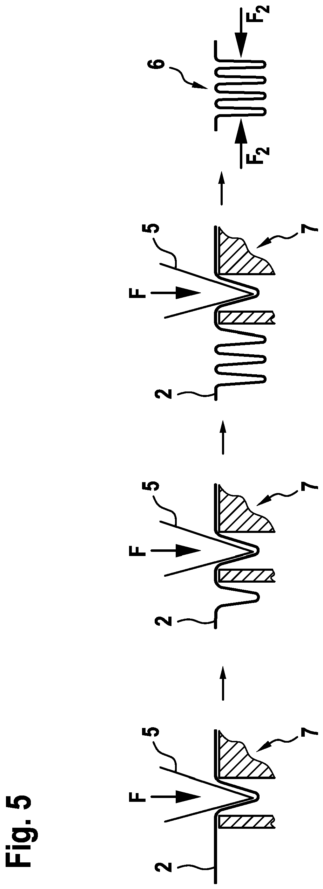

Der Fertigungsprozess des Kaltverformens ist in Fig. 5 dargestellt. Im ersten Schritt wird das Kupferband 2 in eine Vorrichtung 7 gelegt. Anschließend wird das sich wiederholende Muster 4 des Kupferbandes 2 an der Umformkante C mit Hilfe eines Werkzeuges 5 umgeformt. Das Werkzeug 5 kann beispielsweise ein Zahn eines Rades oder ein Stempel sein. Das Werkzeug 5 wirkt mit einer Kraft F auf die Umformkante C. Dabei wird das sich wechselnde Muster 4 des Kupferbandes 2 an einer Umformkante C umgebogen und nach jeder Biegung einer Umformkante C zur nächsten Umformkante C weitertransportiert, so dass aus dem Kupferband 2 durch wechselweises Biegen an den Umformkanten C des sich wiederholenden Musters 4 ein spiralförmiger Körper 6 erzeugt wird. In einem letzten Bearbeitungsprozess wird der spiralförmige Körper 6 in einer weiteren Vorrichtung (nicht dargestellt) mit einer Kraft F₂ gestaucht, so dass die Windungen des spiralförmigen Körpers 6 aufeinanderliegen. Dadurch entsteht eine fertig prozessierte Kupfer-Flachwicklung 1.

Eine Ausführungsform der Erfindung ist in Fig. 6 dargestellt. Das Kupferband 2 ist bei dieser Ausführungsform nicht mit einem elektrisch isolierenden Stoff beschichtet. Weiterhin wäre es möglich, dass das Kupferband 2 zwar mit einem elektrisch isolierenden Stoff beschichtet ist, jedoch aufgrund einer notwendigen thermischen Behandlung der elektrisch isolierende Stoff den Temperaturen nicht Stand hält, so dass eine neue Beschichtung notwendig ist.

In Fig. 6 ist nicht dargestellt, dass nach dem Kaltverformen des spiralförmigen Körpers 6 durch die Versetzungsdichte im Kupferwerkstoff der elektrische Widerstand zu sehr erhöht ist. Um eine ausreichende elektrische Leitfähigkeit wieder herzustellen ist eine Glühbehandlung notwendig.

Nach der Glühbehandlung wird der spiralförmige Körper 6 in ein Tauchbad 8 eingetaucht, um den spiralförmigen Körper 6 mit einem elektrisch isolierenden Stoff zu beschichten. Dadurch werden auch die entstehenden Kanten, welche bei den Fertigungsprozessen entstehen, mit isoliert. Nach der Beschichtung wird der spiralförmige Körper 6 in einer weiteren Vorrichtung (nicht dargestellt) mit einer Kraft F₂ gestaucht, so dass die Windungen des spiralförmigen Körpers 6 aufeinanderliegen. Dadurch entsteht eine fertig prozessierte Kupfer-Flachwicklung 1.

Eine fertig prozessierte Kupfer-Flachwicklung 1 ist in Fig. 7 dargestellt. Es ist an den übereinanderliegenden Lagen erkennbar, dass die Kupfer-Flachwicklung 1 aus einem Kupferband 2 mit der Dicke a hergestellt worden ist. Die Kupfer-Flachwicklung 1 weist eine Breite b auf. Die übereinanderliegenden Lagen stellen dabei gegeneinander isolierte Kupferstege dar.

### 2. Energiewandler

Ein Energiewandler (nicht dargestellt) wird derart hergestellt, dass die fertig prozessierte Kupfer-Flachwicklung 1 als Spulenpaket auf einen Spulenträger gesteckt wird. Im Anschluss erfolgt die Kontaktierung der Anschlusslaschen. Der Spulenträger besteht aus einem weichmagnetischen Kernmaterial und ist beispielsweise ein Magnettopf, Statorzahn oder Rotorzahn.

## Patentansprüche

1. Verfahren zur Herstellung einer Kupferflachwicklung (1) umfassend die Schritte:
- Bereitstellen eines Kupferbandes (2);
- Erzeugen eines sich wiederholenden Musters (4) in dem Kupferband (2), wobei das sich wiederholende Muster (4) durch ein Stanzverfahren, Laserschneiden, Erodieren oder durch Wasserstrahlschneiden erzeugt wird,
- Kaltverformen des Kupferbandes (2), wobei ein spiralförmiger Körper (6) durch wechselweises Biegen geformt wird,
wobei nach der Kaltverformung der spiralförmige Körper (6) glühbehandelt wird und der spiralförmige Körper (6) nach der Glühbehandlung mit einem elektrisch isolierenden Stoff beschichtet wird.

2. Verfahren nach Anspruch 1, wobei die Beschichtung durch ein Tauchbad oder durch eine Sprühbehandlung erfolgt.

## Claims

1. Method for producing a flat copper winding (1), comprising the steps:
- providing a copper strip (2);
- producing a repeating pattern (4) in the copper strip (2), wherein the repeating pattern (4) is generated by a punching process, laser cutting, erosion or by water-jet cutting,
- cold-forming the copper strip (2), a spiral body (6) being formed by alternate bending,
wherein, after the cold forming, the spiral body (6) is annealed and, after the annealing, the spiral body (6) is coated with an electrically insulating material.

2. Method according to Claim 1, wherein the coating is carried out by means of a dip bath or by means of a spray treatment.

## Revendications

1. Procédé de fabrication d'un enroulement plat en cuivre (1), comprenant les étapes suivantes :
- fourniture d'une bande de cuivre (2) ;
- génération d'un motif répétitif (4) dans la bande de cuivre (2), le motif répétitif (4) étant généré par un procédé d'estampage, un découpage au laser, une érosion ou une découpe au jet d'eau,
- déformation à froid de la bande de cuivre (2), un corps en forme de spirale (6) étant formé par cintrage alternatif,
le corps en forme de spirale (6), après la déformation à froid, étant soumis à un traitement de recuit et le corps en forme de spirale (6), après le traitement de recuit, étant revêtu d'une substance électriquement isolante.

2. Procédé selon la revendication 1, dans lequel le revêtement est effectué par immersion ou par un traitement par pulvérisation.
